# EUROPEAN PATENT APPLICATION

(11) **EP 4 715 641 A1**
(43) Date of publication of application: **25.03.2026**
(21) Application number: 25200095.5
(22) Date of filing: 04.09.2025
(51) Int. Cl.: G06F 21/32

(54) **BRAIN ACTIVITY-BASED BIOMETRIC AUTHENTICATION WITH A PASSWORD**

(30) Priority: 20.09.2024 US 202418891227
(71) Applicant: NXP B.V., 5656 AG Eindhoven (NL)
(72) Inventor: Veshchikov, Nikita, 5656AG Eindhoven (NL); Verschueren, Pieter, 5656AG Eindhoven (NL); Gautama, Temujin, 5656AG Eindhoven (NL)
(74) Representative: Colaiuda, Antonella

(57) **Abstract**

A method, system, apparatus, and program code are provided for authenticating a user by generating a user prompt identifying a mental task to be performed by the user, scanning the user for a biometric brain activity signal when the user performs the mental task so that the biometric brain activity signal reflects brainwave activity of the user when performing the mental task, and then comparing the biometric brain activity signal to a reference biometric template signal to determine whether to authenticate the user based on whether the biometric brain activity signal matches the reference biometric template signal.

## Description

### BACKGROUND

### Field

The present disclosure is directed in general to controlling access to data processing systems. In one aspect, the present disclosure relates to methods and systems for authenticating the identity of a person seeking access to a data processing system.

### Description of the Related Art

A data processing system that grants user access to information that is protected from unauthorized access may use an authentication mechanism to confirm the identity of the user before granting access. There are multiple ways to authenticate the identity of a person, including but not limited to passwords or PINs, biometrics, and hardware tokens. These are often referred to as authentication factors. For example, a password is a string of characters (letters, numbers, and other symbols) used to authenticate an identity or to verify access authorization. Similarly, an access token may contain the security credentials for a login session and identifies one or more of the user, the user's groups, the user's privileges, and, in some cases, a particular application. Biometrics provide another mechanism for authenticating a user based on the user's characteristics, such as fingerprints, palm prints, facial features, voice, etc. Biometric authentication may be useful for payment applications, unlocking devices, such as smartphones, and unlocking doors. For increased security of the authentication process, some systems use a two-factor authentication with any combination of two out of three authentication factors (e.g., a password and a fingerprint, or a hardware token and a PIN.)

All of these authentication factors have some advantages and disadvantages. For example, an advantage of passwords (or PINs) is that they can be reset and changed if they are compromised. However, passwords and PINs can be discovered using brute-force techniques, by guessing, or even by using extortion. In addition, it is often difficult to remember passwords. While biometric authentication factors overcome the disadvantages of passwords, one disadvantage of biometrics is that the biometric factor cannot be readily replaced (e.g., a user has only one face for face recognition) or only has a limited number of replacement options (e.g., a fingerprint-based authentication factor can potentially be replaced 9 times since we have 10 fingers). This limitation presents a challenge if different organizations or systems use the same biometric factor, in which case their databases can be used to match people and thus discover more information about some of them by having info from two organizations. Another limitation with biometric authentication factors is that they are susceptible to a replay attack where an attacker intercepts and records exchanged information (such as a user's voice or fingerprint) between an authenticating user and a system to which the user is authenticating, and then uses the intercepted information "replay" or impersonate the user and gain access to the system.

As seen from the foregoing, the existing user authentication systems are extremely difficult at a practical level by virtue of the challenges with providing a user-friendly and secure mechanism for authenticating the identity of the user which meets the applicable performance, design, complexity and cost constraints. Even with multifactor authentication techniques, identity theft attacks remain a significant challenge. For example, while identity theft attacks can be prevented by using strong digital signatures, such solutions often require additional complexity, thereby compromising usability and ubiquity.

### BRIEF DESCRIPTION OF THE DRAWINGS

Embodiments of this disclosure may be understood, and numerous objects, features and advantages obtained, when the following detailed description of the embodiments is considered in conjunction with the following drawings.
Figure 1 diagrammatically depicts a system for brain activity-based biometric authentication in accordance with selected embodiments of the present disclosure.
Figure 2 depicts a simplified block diagram of an authentication system which uses biometric data to enroll and authenticate a user in accordance with selected embodiments of the present disclosure.
Figure 3 depicts a simplified flow chart showing the logic for performing brain activity-based biometric authentication of a user in accordance with selected embodiments of the present disclosure.
Figure 4 depicts a simplified block diagram of a computer data processing system which uses brain activity-based biometric data to authenticate a user in accordance with selected embodiments of the present disclosure.

### DETAILED DESCRIPTION

A multi-factor authentication system, apparatus, method, and program code are described for authenticating the identity of a user of a data processing system by combining a password prompt and associated brain activity-based biometric marker into one inseparable authentication factor. In selected embodiments, biometric brain activity data samples are captured by one or more brain activity sensors or devices that can measure brain activity while a person performs a specific password-related task, such thinking about a password or object or activity. For example, a pair of earphones or ear-pieces may be used to capture and record electro-encephalogram (EEG) waveforms generated by the brain of a user seeking to access a data processing system. In addition or in the alternative, a functional near-infrared spectroscopy (FNIRS) sensor may be used to analyze brain activity by measuring changes in the cerebral blood flow by capturing red and infrared light reflectance in the cortical tissue. Other biometric brain activity sensor devices may be used, such as headbands, headphones, helmets, 3D-goggles, glasses, or other specialized equipment, for measuring EEG or FNIRS signals. By prompting the user to think about the specific password-related task and using the brain activity sensors to capture and record the resulting brain activity as a sequence of biometric samples, the captured biometric samples may be compared to a reference biometric sample template for the user to determine if there is a match or not. As disclosed herein, the reference biometric sample template may be generated and stored as part of a user enrollment phase when the user's brain activity is captured and recorded after prompting the user to think about a specific password-related task. In selected embodiments, a suitable cryptographic technique or protocol may be used to connect or pair the brain activity sensors with a data processing system (e.g., a smartphone or other machine or service) that needs to be accessed by the user, and the captured biometric samples from the brain activity sensors can be processed for template matching directly at the brain activity sensors, at the data processing system, at a secure server, or a combination thereof. If the biometric sample signal matches a previously recorded template, then the user authentication is confirmed.

Various illustrative embodiments will now be described in detail with reference to the accompanying figures. While various details are set forth in the following description, it will be appreciated that the systems and methods disclosed herein may be practiced without these specific details, and that numerous implementation-specific decisions may be made to the embodiments described herein to achieve the device designer's specific goals, such as compliance with process technology or design-related constraints, which will vary from one implementation to another. While such a development effort might be complex and time-consuming, it would nevertheless be a routine undertaking for those of ordinary skill in the art having the benefit of this disclosure. For example, selected aspects are shown in block diagram and flow chart form, rather than in detail, in order to avoid limiting or obscuring the present disclosure. In addition, some portions of the detailed descriptions provided herein are presented in terms of algorithms or operations on data within a computer memory. Such descriptions and representations are used by those skilled in the art to describe and convey the substance of their work to others skilled in the art. Various illustrative embodiments will now be described in detail below with reference to the figures.

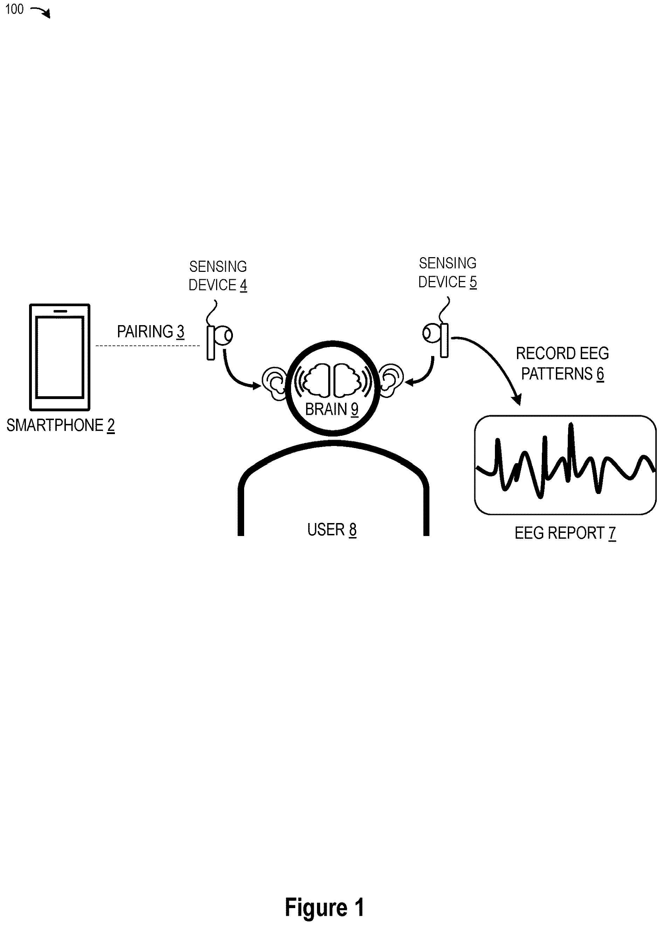

For an improved understanding of selected embodiments of the present disclosure, reference is now made to Figure 1 which diagrammatically depicts a brain activity-based biometric authentication system 100 which employs a smartphone 2 (or other suitable data processing system) that is paired 3 with brain activity sensing devices 4, 5 to capture and record EEG patterns 6 as an EEG report 7. In order to generate the EEG patterns 6, the user 8 is prompted to think about a specific password-related task, such as a password or object or activity. When the brain 9 of the user 8 seeking to access the smartphone 2 thinks about the specific password-related task, the brain activity sensing devices 4, 5 capture the EEG patterns 6 as an EEG report 7 which can then be used to authenticate the identity of the user 8 by comparison with a reference biometric sample template for the (authorized) user 8.

While the brain activity-based biometric authentication system 100 is shown as including a smartphone 2, it will be appreciated that any data processing system may be used in which user authentication is required before logging into the device, unlocking the device, unlocking a service for access (such as a payment service or another application), performing another operation, or any combination thereof. Examples of such data processing systems include, but are not limited to, a computer server (such as a host system, solution server, or other communication device), a user device (such as a mobile device, or other user equipment), or other computing devices which contain or access information that is protected from unauthorized access.

In addition, the brain activity-based biometric authentication system 100 is shown as including earphone sensor devices 4, 5, but it will be appreciated that any suitable biometric brain activity sensor devices may be used for measuring EEG or FNIRS signals, including but not limited to headbands, headphones, helmets, 3D-goggles, glasses, or another wearable device or a handheld device that is adapted to measure or sense brainwave activity. For example, the earphone sensor devices 4, 5 may be embodied with an EEG-earphone that is adapted to measure EEG waveforms from an outer ear of the user. Generally speaking, the sensor devices 4, 5 are capable of measuring and capturing electrical signal activity in the human brain 9. One technique for recording brain activity is to measure the electro-magnetic radiation with an electro-encephalogram (EEG) recording 6. Another technique is to use a functional near-infrared spectroscopy (FNIRS) measurement of the changes in the cerebral blood flow which is caused by neural activity in the brain that occurs during the performance of mental tasks. While brain activity signals have been used to provide a biometric signal for the user, there are challenges with EEG-based person recognition, including issues pertaining to temporal stability, psychological and physiological changes, protocol design, equipment, and performance evaluation. As a result, there is a trade-off between reproducibility and distinctiveness, the latter of which is important for the application of biometrics.

In operation, the smartphone 2 (or the headset earphones or some other machine or service that needs to be unlocked) uses a pairing process 3 to connect or pair with the sensor devices 4, 5 which provide biometric input data to the smartphone 2. The pairing process 3 may use a cryptographic protocol to secure the capture and conveyance of the biometric input data. Once paired, the smartphone 2 prompts the user 8 to think of a specific password-related task or memory, such thinking about a password or object or activity or even a particular memory of the user 8. Other user prompts may include displaying an image, such as a random image or another image (such as an image selected by the user or an image selected by a computing device, such as the smartphone 2), for contemplation by the user 8. In one or more embodiments, the prompts may include displaying multiple images.

In response, the sensor devices 4, 5 register the EEG pattern 6 of the user 8 for authentication, such as by recording the EEG pattern as an EEG report 7. As will be appreciated, the biometric input data captured by the sensor devices 4, 5 can be any suitable brainwave biometric data signal, including but limited to an EEG signal, FNIRS signal, MRI (magnetic-resonant imaging) signal, or the like. The EEG report 7 can be processed directly in the sensor devices 4, 5 or can be sent to the paired smartphone 2 for analysis. If the EEG report 7 matches a previously-recorded reference biometric sample template for the user 8, then the authentication system 100 authenticates the user 8. In this way, the authentication system 100 combines biometry and password-like features into a single biometric input data signal (EEG Report 7) which can be used for an authentication approach which mitigates some of the disadvantages of passwords as well as of biometrics.

As will be appreciated by persons skilled in the art, any comparison between the EEG report 7 and a previously-recorded reference biometric sample template may use any suitable feature extraction technique to identify and compare predetermined biometric characteristics or properties of the EEG pattern 6 and the previously-recorded biometric sample template. In selected embodiments, the brain activity data produced by the sensor devices 4 and 5 may be processed with filters, feature extraction, and artifact removal techniques during the enrollment process to generate the reference biometric sample template, and then similar filters, feature extraction, and artifact removal techniques may be applied to the brain activity data produced by the sensor devices 4 and 5 during the authentication process to generate the EEG report 7 prior to comparison processing to determine a match. For example, a clean reference or template signal may be extracted from the raw input by using filters and feature extraction techniques during the enrollment process to extract predetermined data and remove artifacts (such as eye blink data and other data) prior to forming the initial reference biometric sample template that is then stored in a secure memory. In similar fashion, the EEG report 7 may be extracted as a clean biometric input data signal by using filters and feature extraction techniques during the authentication process. As will be appreciated, there will always be differences between the previously-recorded reference biometric sample template and the biometric input data signal that was extracted from a new authentication, so the comparison processing is not required to be a strict "equality" comparison, but may apply a general similarity comparison, such as by applying a similarity threshold to assess the similarity of the biometric input data signal to the previously-recorded reference biometric sample template. In other embodiments, the comparison processing may employ machine learning (ML) techniques to extract a set of predetermined features as an input in an N-dimensional space (e.g., N computed values that represent a biometric brainwave signal). The output can be called a vector representation (of length N). If the reference biometric sample template is represented with a first output vector and the biometric input data signal is represented with a second output vector, the comparison processing may be performed by computing a distance between the first and second output vectors in the N-dimensional space. If the distance is close to 0 (i.e., below the threshold), then the comparison processing signals that there is a match. But if the computed comparison distance is at or above the threshold, then the comparison processing signals that there is not a match.

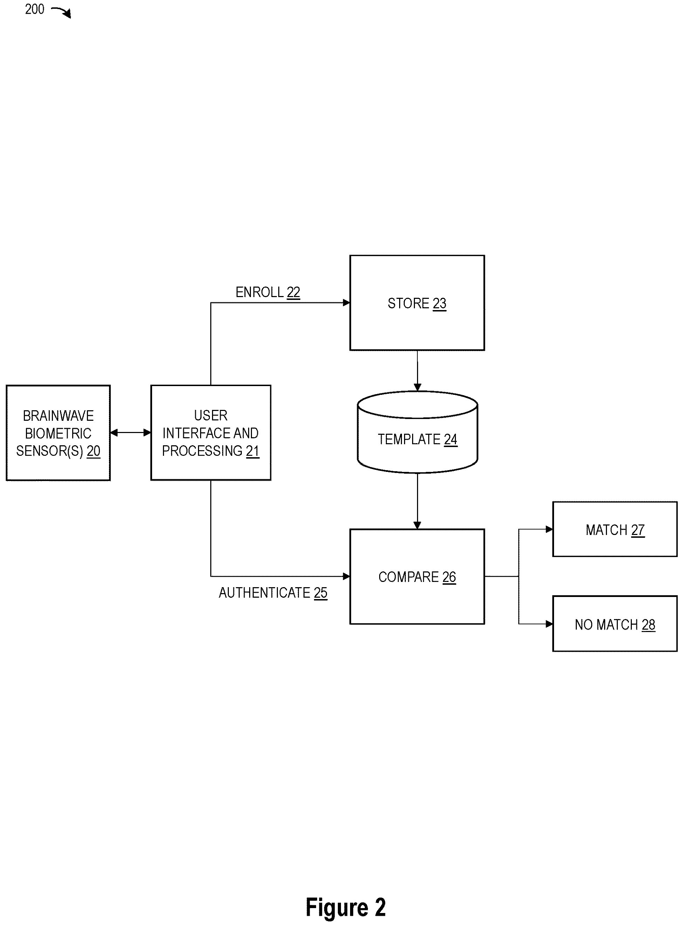

For an improved understanding of selected embodiments of the present disclosure, reference is now made to Figure 2 which depicts a simplified block diagram of an authentication system 200 which uses biometric data to enroll and authenticate a user. As depicted, the authentication system 200 includes one or more brainwave biometric sensors 20 which may be adapted to detect and measure brainwave activity (e.g., an EEG pattern or signal) of a user seeking to access a secure document or device. To this end, the authentication system 200 includes a user interface and processing module 21 which is connected to the one or more brainwave biometric sensors 20 to receive information, such as a biometric brainwave signal. In addition, the user interface and processing module 21 may be connected and configured to provide user prompt information to the one or more brainwave biometric sensors 20 or some other associated computer-based device, such as a visual display or a speaker. In this arrangement, the user interface and processing module 21 may generate an audio or visual prompt to the user to convey authentication-related information, such as by thinking about a specific password, memory-related task, image, or object.

During an initial enrollment phase, the user interface and processing module 21 may provide audio instructions via a speaker or headphones, visual instructions on a display, or any combination thereof to prompt the user to think about a specific password-related task, such as one or more of a password, an object, an activity, or a particular memory. For example, the user could be prompted to think about a favorite childhood pet. While the user is prompted to think about the password-related task, the brainwave biometric sensor(s) 20 collect the biometric brainwave data generated by the user, such as an EEG waveform. In selected embodiments, the user interface and processing module 21 may generate several user prompts so that multiple instances of the biometric brainwave data can be collected as enrollment data 22. Subsequently, the user interface and processing module 21 transfers the enrollment data 22 to secure memory storage 23 where it is stored in a user's reference biometric sample template 24 for the user who is now enrolled in the authentication system 200. In other embodiments, the enrollment phase might prompt the user to think about their secret password, and then about some random and unrelated object (e.g., suggested by the device itself), and then again about their secret password. In other embodiments, the enrollment phase prompt may instruct the user to perform a task, such as reading a sentence, moving the eyes from left to right, or other actions that will generate a biometric brainwave data signal. This procedure can be repeated to get multiple readings of the EEG while the person thinks about their password.

At a subsequent time, the authentication system 200 enters an authentication phase in response to receiving a user authentication request from an enrolled user. In the authentication phase, the user interface and processing module 21 may be connected and configured to provide a user authentication prompt to the user, such as by generating an audio or visual prompt to the user to convey authentication-related information by thinking about a password-related task, such as a specific password, memory-related task, image or object. While the user is prompted by the user interface and processing module 21 to think about the password-related task, the brainwave biometric sensor(s) 20 collect the biometric brainwave data generated by the user, and the user interface and processing module 21 collects one or more instances of the biometric brainwave data as authentication data 25. Subsequently, the user interface and processing module 21 transfers the authentication data 25 to a comparison module 26 which is connected and configured to retrieve the user's reference biometric sample template 24 from secure memory storage 23, and to compare the retrieved data to the authentication data 25. If there is a match 27 between the authentication data 25 and the user's reference biometric sample template 24, then the user is authenticated. However, if there is not a match 28 between the authentication data 25 and the user's reference biometric sample template 24, then the user is not authenticated.

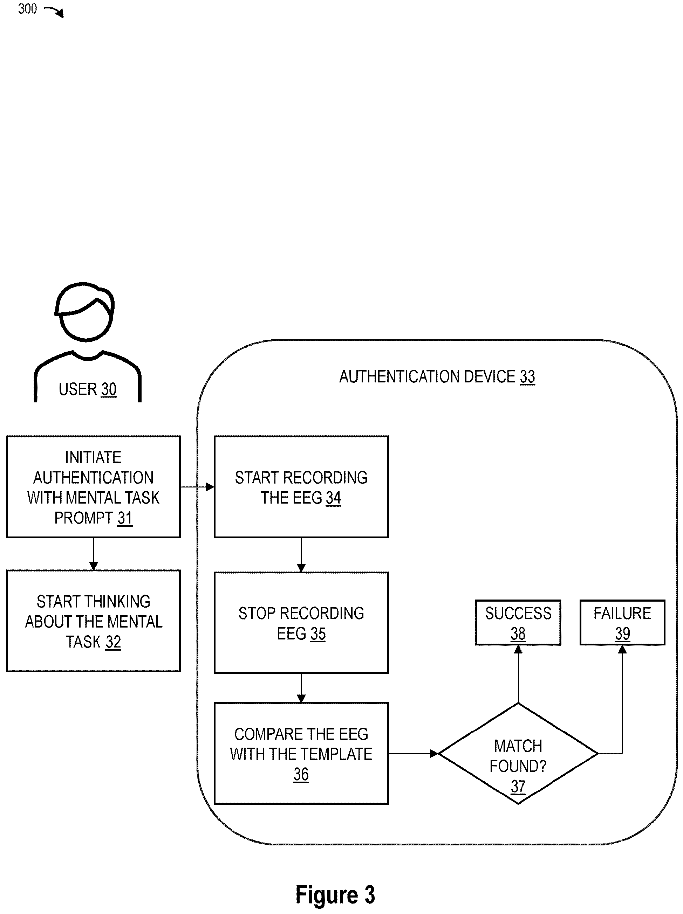

For an improved understanding of selected embodiments of the present disclosure, reference is now made to Figure 3 which depicts a simplified flow chart showing the authentication logic sequence 300 for performing brain activity-based biometric authentication of a user 30 at an authentication device 33. As depicted, the user 30 may initiate the authentication logic sequence 300 by pressing a button or opening a program on the authentication device 33, which may cause the authentication device 33 to initiate an authentication process by presenting a mental task prompt 31 to the user 30. As will be appreciated, other user actions can be used to initiate the authentication logic sequence 300. For example, an application running on the authentication device 33 or another computer can prompt the user 30 to start the authentication process. In either case, the initiation of the authentication process will include providing a prompt to the user 30 to perform a specific memory or mental task, such as thinking about one or more of a secret password, an object, a memory, or an image according to the mental task prompt provided to the user (step 31). In response to the mental task prompt, the user 30 starts thinking about the mental task (step 32), which causes the user's brain to generate unique brainwave activities that are caused by and correspond to the mental task provided by the mental task prompt. The unique brainwave activities may be unique to the user, such that two different users viewing the same prompt may show different brainwave activity that can be determined by the system.

Concurrently with presenting the mental task prompt 31, the authentication device 33 starts recording the EEG pattern (step 34) that measures the brainwave activities captured from biometric brainwave sensors (sensing devices 4 and 5 in Figure 1), which may be worn by, attached to, or proximate to the user 30. After a predetermined time interval that allows for the user 30 to think about the mental task (step 32), the authentication device 33 stops recording the EEG pattern (step 35), and then processes the recorded EEG pattern for comparison to a reference EEG pattern template for the user 30 (step 36). Based on the comparison results, the authentication device 33 determines if there is a match or not (step 37). If the recorded EEG pattern matches a previously recorded reference EEG pattern template for the user 30, then the user authentication is successful (i.e., the user is authenticated) (step 38). However, if there is no match between the recorded EEG pattern and the previously recorded reference EEG pattern template for the user 30, then the user authentication fails (step 39).

Referring back to the initiation of the authentication process including the mental task prompt (step 31), the specific memory or mental task prompt is not limited to prompting the user to think about a secret password, object, image, or specific memory. Other mental tasks are possible in lieu of or in addition to such prompts. For example, the user 30 can be prompted to think of a person (e.g., visually imagining their grandmother), an object (e.g., visualizing a banana instead of using the word "banana" and visualizing how it is spelled), or a process (e.g., visually imagining a chimp eating a banana). In addition or in the alternative, the user 30 can be prompted to recall one of their childhood memories instead of thinking of an object or a word, or think of a piece of art or music, or even an emotion. The user prompt could also combine several of these ideas into one (e.g., thinking of a pink elephant while recalling Vivaldi's musical work, "The Four Seasons - Summer: III. Presto."). In one or more other embodiments, the prompt may include providing a sequence of images to a display, providing a signal to headphones or a speaker to produce an audio output, presenting a mathematical problem on a display, providing other data to the display, or any combination thereof, causing the user 30 to consider the one or more prompts, which may produce unique brain activity that can be captured by the sensing devices 4 and 5. Thus, instead of employing an authentication process where the user types a password into a keyboard, the user's mental task is captured by brain activity sensors (e.g., sensing devices 4 and 5 in Figure 1), which capture and record the resulting brain activity as a sequence of biometric samples. As seen from the foregoing, the authentication logic sequence 300 is different from conventional authentication approaches which are based on an EEG measurement that is captured while the user is "at rest".

As an alternative to prompting the user 30 to think of a password or object, the authentication device 33 can show the user 30 a specific image and use the biometric brainwave data generated in response to the specific image as the password for the user 30. In another embodiment, the authentication device 33 could be configured to show multiple random images to a person, including one special image that is known to be the password for the user 30, and then use the EEG that is recorded while the special image is shown as the password for the user 30. For example, an image of the multiple random images can be shown for 1 or 2 seconds before showing another of the multiple random images. While a single image could be used to generate biometric brainwave data, there are advantages to showing several images, including obtaining better EEG readings since the multiple images allow a baseline of background readings to be established, allow calibration of the brain activity sensors, or any combination thereof. In other embodiments, the authentication device 33 can simultaneously show multiple images while also tracking the eye movement of the user 30. If the eye movements indicate that the user 30 is looking at the right picture and their EEG matches the template, then the user is authenticated. As will be appreciated, image-based user prompts will generate unique biometric brainwave data signals from different users. As a result, the image does not need to be a secret image during the enrollment setup or authentication processing sequence.

In addition or in the alternative, the mental task prompt for the user 30 may include an audio prompt, such as asking the user 30 to think about series of sounds that are played for the user 30. As will be appreciated, other people will not be able to hear the sounds when the user 30 is wearing earphones.

As yet another variation on the mental task prompt, the user 30 may receive a "thought prompt" which asks the user to think about a specific memory. In such embodiments, the authentication device 33 may remind the user 30 what to think about, and the resulting EEG pattern is compared to a previously-recorded reference EEG pattern template that was generated with the same "thought prompt". For example, the authentication device 33 can prompt the user 30 by displaying a visual message or playing an audio message to "think about your father making pancakes for you," and then immediately begin recording the EEG of the user 30.

Referring now to the comparison and matching steps 36, 37, it will be appreciated that the reference EEG pattern template for the user 30 will have been previously generated and stored during an enrollment phase by using the same mental task as provided in the user prompt so that the brainwave activity of the user can be captured and processed to form the reference EEG pattern template for the user 30. For example, if a mental task prompt includes a special non-random image that is shown to the user, this same image would have been displayed to the user during an enrollment phase where the resulting EEG pattern is recorded as the reference EEG pattern template for the user 30. In this way, a match between the reference EEG pattern template and the EEG pattern generated by the user 30 in response to the user prompt will result in the user 30 being authenticated (step 38). Otherwise, the authentication fails (step 39).

As will be appreciated by those skilled in the art, there are a number of advantages and benefits of the disclosed system for combining mental task prompts with brain activity-based biometric authentication. For example, a user must be alive and conscious in order to be authenticated. In contrast, a conventional finger-print biometric authentication system could be overcome if a malicious attacker forces a person to authenticate against their will by overpowering them (e.g., putting their finger on the fingerprint scanner). Another advantage of the disclosed brain activity-based biometric authentication is that the reference pattern template can be updated or changed by changing the mental task that is used to create the reference pattern template (i.e., change the user password). In contrast, conventional biometric authentication systems are not easily changed when the biometric data signal is "fixed" for a given user. This flexibility is also advantageous in situations where several different devices or organizations using a shared biometric measure (e.g., facial recognition) are accessed by a single user. In this case, if one of the devices or organizations is compromised, then the others might be at a higher risk of attack through stolen templates. With the disclosed brain activity-based biometric authentication system, each organization or device can add a differentiator to the biometric authentication by using a password that can be different for different organizations and can be changed when required.

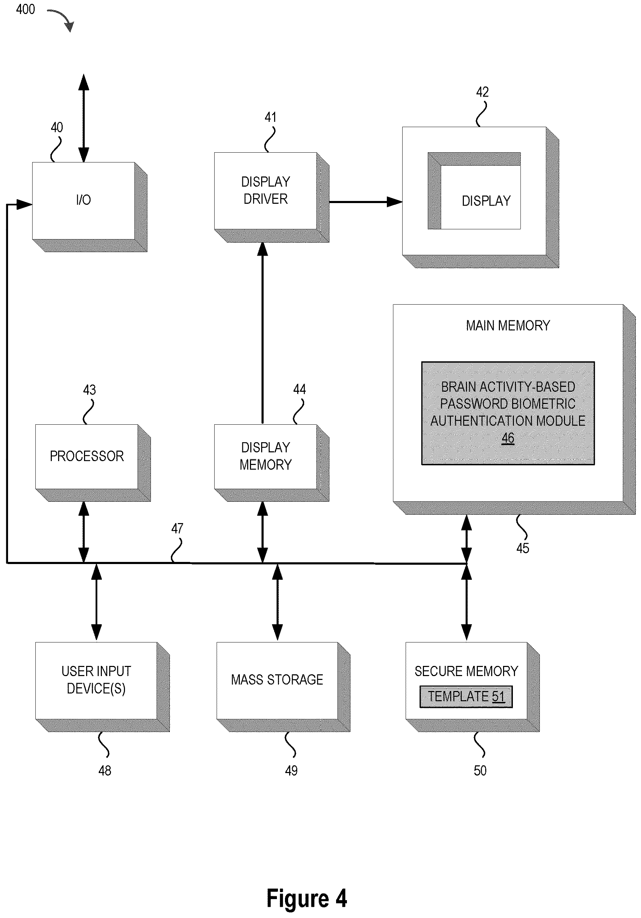

To provide additional details for an improved understanding of selected embodiments of the present disclosure, reference is now made to Figure 4 which depicts a simplified block diagram of a computer data processing system 400 which uses brain activity-based biometric data to authenticate a user. As disclosed, the computer data processing system 400 includes input user device(s) 48, such as a keyboard, a mouse, a scanner, a camera, a microphone, another input device, or any combination thereof, which are coupled to a bi-directional system bus 47. The input user device(s) 48 are used for introducing user input to the computer system 400 and communicating that user input to processor 43. The computer system 400 may also include a display memory 44, main memory 45, mass storage 49, and secure memory 50, all coupled to bi-directional system bus 47 along with input user device(s) 48 and processor 43. The mass storage 49 may include both fixed and removable media, such as other available mass storage technology. The bi-directional system bus 47 may include, for example, 32 address lines for addressing display memory 44 or main memory 45. The bi-directional system bus 47 may also include, for example, an n-bit data bus for transferring data between and among the components, such as CPU or processor 43, main memory 45, display memory 44, mass storage 49, and secure memory 50, where "n" is, for example, 32 or 64. Alternatively, multiplex data/address lines may be used instead of separate data and address lines.

The computer system 400 may also include I/O device(s) 40 which provide connections to peripheral devices, such as a printer, and may also provide a direct connection to remote server computer systems via a telephone link or to the Internet via an Internet Service Provider (ISP). I/O device(s) 40 may also include a network interface device to provide a direct connection to remote server computer systems via a direct network link to the Internet via a POP (point of presence). Such connection may be made using, for example, wireless techniques, including digital cellular telephone connection, Cellular Digital Packet Data (CDPD) connection, digital satellite data connection or the like. Examples of I/O devices 40 include modems, sound and video devices, and specialized communication devices such as the aforementioned network interface.

Computer programs and data are generally stored as instructions and data in mass storage 49 until loaded into main memory 45 for execution. Computer programs may also be in the form of electronic signals modulated in accordance with the computer program and data communication technology when transferred via a network. The method and functions relating to system and method for authenticating a user by combining a mental task prompt and associated brain activity-based biometric marker into one inseparable authentication factor may be implemented in a brain activity-based password biometric authentication module 46 which captures biometric brain activity data samples from one or more I/O devices 40 (e.g., brain activity sensors) that can measure brain activity while a person performs a specific memory task, and then compares the biometric brain activity data samples to a reference biometric sample template 51 stored in secure memory 50.

The processor 43, in one embodiment, is a microprocessor. Main memory 45 is comprised of dynamic random access memory (DRAM). Display memory 44 is a dual-ported random access memory. One port of the display memory 44 is coupled to display amplifier or driver 41. The display amplifier or driver 41 is used to drive the display 42. Display amplifier or driver 41 is well known in the art and may be implemented by any suitable means. This circuitry converts pixel data stored in display memory 44 to a raster signal suitable for use by display 42. Display 42 is a type of monitor suitable for displaying graphic images.

The data processing system components, programs, module, and data structures 40-50 depicted in the computer data processing system 400 are not intended to be exhaustive, but rather are representative to highlight components that can be implemented by the present disclosure. For instance, the data processing system components may include alternate memory storage devices. In addition, multiple processor devices may be used to run the brain activity-based password biometric authentication module 46 at either or both of the customer or operator computer systems. These and other variations are intended to be within the scope of the present disclosure.

By now it should be appreciated that there has been provided a method, architecture, circuit, and program code for authenticating a user. In the disclosed method, an authenticating device generates a user prompt identifying a mental task to be performed by the user. In addition, the authenticating device presents the user prompt to the user. In selected embodiments, the user prompt is presented to the user by providing a message to the user which prompts the user to think about a specified password, object, memory, or one or more images when performing the mental task. In such embodiments, the user prompt is provided by displaying the message for viewing by the user or playing the message for listening by the user. Subsequently, the user is scanned for a biometric brain activity signal during a scanning interval when the user performs the mental task, where the biometric brain activity signal reflects brainwave activity of the user when performing the mental task. In selected embodiments, one or more brain activity sensor devices scan the user for a biometric brain activity signal by measuring electro-encephalogram (EEG) waveforms or functional near-infrared spectroscopy (FNIRS) waveform signals generated by the user when performing the mental task. In such embodiments, the brain activity sensor devices may include an earphone that is adapted to measure EEG waveforms from an outer ear of the user. In addition, the authentication device receives the biometric brain activity signal, and then compares the biometric brain activity signal to a reference biometric template signal. In addition, the authenticating device determines whether to authenticate the user based on whether the biometric brain activity signal matches the reference biometric template signal. In selected embodiments, the disclosed method also includes collecting the reference biometric template signal from the user during a user enrollment phase. In such embodiments, the reference biometric template signal may be collected from the user during a user enrollment phase by presenting the user with a user enrollment prompt which prompts the user to perform a mental enrollment task by thinking about the specified password, object, memory, or one or more images; and then scanning the user for the reference biometric template signal when the user performs the mental enrollment task, where the reference biometric template signal reflects brainwave activity of the user when performing the mental enrollment task; and then storing the reference biometric template signal in memory.

In another form, there is provided an authentication system and methodology having first and second computing devices. The disclosed first computing device is configured to request data access by scanning a biometric brain activity signal that is specific to a user of the first computing device in response to a user prompt identifying a mental task to be performed by the user. In selected embodiments, the first computing device includes a display screen or audio speaker which provides the user prompt as a message which instructs the user to think about a specified password, object, memory, or one or more images when performing the mental task. In other selected embodiments, the first computing device includes a smartphone coupled to one or more brain activity sensor devices scan the user for a biometric brain activity signal by measuring electro-encephalogram (EEG) waveforms or functional near-infrared spectroscopy (FNIRS) waveform signals generated by the user when performing the mental task. In selected embodiments, the first computing device is further configured to collect the reference biometric template signal from the user during a user enrollment phase. In other selected embodiments, the first computing device is further configured to collect the reference biometric template signal by: presenting the user with a user enrollment prompt which prompts the user to perform a mental enrollment task by thinking about the specified password, object, memory, or one or more images; scanning the user for the reference biometric template signal when the user performs the mental enrollment task, where the reference biometric template signal reflects brainwave activity of the user when performing the mental enrollment task; and storing the reference biometric template signal in memory. The disclosed second computing device is configured to authenticate a data access request from the first computing device by storing a copy of the biometric brain activity signal, comparing the biometric brain activity signal to a reference biometric template signal, and determining whether to authenticate the user based on whether the biometric brain activity signal matches the reference biometric template signal. In selected embodiments, the second computing device includes one or more earphones configured to capture and record electro-encephalogram (EEG) waveforms generated by the user when performing the mental task. In selected embodiments, the second computing device includes one or more earphones configured to capture and record electro-encephalogram (EEG) waveforms generated by the user when performing the mental task. In selected embodiments, the authentication system includes one or more brain activity sensor devices adapted to measure EEG waveforms from an outer ear of the user. In other selected embodiments, the one or more brain activity sensor devices are included in the second computing device.

In yet another form, there is provided a computer readable storage medium embodying computer program code with computer executable instructions configured for authenticating information from a user. Under control of the computer program code, instructions are executed to generate a user prompt which identifies a mental task to be performed by the user. In addition, instructions are executed to send the user prompt to a computing device for presentation to the user. In addition, instructions are executed to receive a biometric brain activity signal that is collected by scanning the user during a scanning interval when the user performs the mental task, where the biometric brain activity signal reflects brainwave activity of the user when performing the mental task. In addition, instructions are executed to compare the biometric brain activity signal to a reference biometric template signal. In addition, instructions are executed to determine whether to authenticate the user based on whether the biometric brain activity signal matches the reference biometric template signal. In selected embodiments, the computer program code is embodied in a handheld or wearable computer configured for authenticating the user if the biometric brain activity signal collected from the user matches the reference biometric template signal collected from the user during an enrollment phase. In other embodiments, the computer program code also includes computer executable instructions configured to generate the user prompt as an audio message, a visual message, or a combination thereof, which prompts the user to perform a specified action or think about one or more of a specified password, an object, a memory, an image when performing the mental task. In selected embodiments, the computer program code also includes computer executable instructions configured to instruct one or more brain activity sensor devices to scan the user for a biometric brain activity signal by measuring electro-encephalogram (EEG) waveforms or functional near-infrared spectroscopy (FNIRS) waveform signals generated by the user when performing the mental task.

The block diagrams in the figures illustrate the architecture, functionality, and operation of possible implementations of systems, methods and computer program products according to various embodiments. In this regard, each block in the block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams, and combinations of blocks in the block diagrams, can be implemented by special purpose hardware-based systems that perform the specified functions or acts, or combinations of special purpose hardware and computer instructions.

While particular embodiments have been shown and described, it will be obvious to those skilled in the art that, based upon the teachings herein, that changes and modifications may be made without departing from this disclosure and its broader aspects. Therefore, the appended claims are to encompass within their scope all such changes and modifications as are within the scope of this disclosure. Furthermore, it is to be understood that the invention is solely defined by the appended claims. It will be understood by those with skill in the art that if a specific number of an introduced claim element is intended, such intent will be explicitly recited in the claim, and in the absence of such recitation no such limitation is present. For non-limiting example, as an aid to understanding, the following appended claims contain usage of the introductory phrases "at least one" and "one or more" to introduce claim elements. However, the use of such phrases should not be construed to imply that the introduction of a claim element by the indefinite articles "a" or "an" limits any particular claim containing such introduced claim element to inventions containing only one such element, even when the same claim includes the introductory phrases "one or more" or "at least one" and indefinite articles such as "a" or "an"; the same holds true for the use in the claims of definite articles. As will be appreciated by one skilled in the art, aspects may be embodied as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer readable medium(s) having computer readable program code embodied thereon. The computer readable medium(s) may include a hard disc drive, a flash drive, a solid-state drive, or other non-volatile storage devices or may include a distributed "cloud-based" storage that may store the computer readable program code in one or more memory devices accessible via a network, such as the Internet, a local area network, a proprietary network, other types of networks, or any combination thereof. As used herein, the phrase "computer readable medium" refers to a non-transitory data storage medium or device.

Program code embodied on a computer readable medium may be transmitted using any appropriate medium, including but not limited to wireless, wireline, optical fiber cable, radio frequency (RF) signals, etc., or any suitable combination of the foregoing.

Computer program code for carrying out operations for aspects of the present disclosure may be written in any combination of one or more programming languages, including an object-oriented programming language such as Java, Smalltalk, C++ or the like and conventional procedural programming languages, such as the "C" programming language or similar programming languages.

Aspects of the present disclosure are described hereinabove with reference to block diagrams of methods, apparatus (systems) and computer program products according to embodiments. It will be understood that each block of the block diagrams, and combinations of blocks in the flowchart illustrations, the block diagrams, or both, can be implemented by computer program instructions. These computer program instructions may be provided to a processor of a computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. In certain implementations, the methods, apparatus (systems) and computer program products according to embodiments of the invention may be implemented asa system on a chip (SOC).

These computer program instructions may also be stored in a computer readable medium that can direct a computer, other programmable data processing apparatus, or other devices to function in a particular manner, such that the instructions stored in the computer readable medium produce an article of manufacture including instructions which implement the function or action specified in the flowchart or block diagram.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions or action specified in the flowchart or block diagram.

Although the described exemplary embodiments disclosed herein focus on example multi-factor authentication system, apparatus, method, and program code for authenticating the identity of a user of a data processing system by combining a password prompt and associated brain activity-based biometric marker into one inseparable authentication factor, the present invention is not necessarily limited to the example embodiments illustrate herein. For example, various embodiments may use additional or fewer circuit components than those specifically set forth. Thus, the particular embodiments disclosed above are illustrative only and should not be taken as limitations upon the present invention, as the invention may be modified and practiced in different but equivalent manners apparent to those skilled in the art having the benefit of the teachings herein. Accordingly, the foregoing description is not intended to limit the invention to the particular form set forth, but on the contrary, is intended to cover such alternatives, modifications and equivalents as may be included within the scope of the disclosure as defined by the appended claims so that those skilled in the art should understand that they can make various changes, substitutions and alterations without departing from the scope of the disclosure in its broadest form.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method of authenticating a user, comprising:
generating a user prompt identifying a mental task to be performed by the user;
presenting the user prompt to the user;
scanning the user for a biometric brain activity signal during a scanning interval when the user performs the mental task, where the biometric brain activity signal reflects brainwave activity of the user when performing the mental task;
receiving the biometric brain activity signal;
comparing the biometric brain activity signal to a reference biometric template signal;
and
determining whether to authenticate the user based on whether the biometric brain activity signal matches the reference biometric template signal.

2. The method of claim 1, where presenting the user prompt comprises providing the user prompt in a message to the user which prompts the user to think about one or more of a specified password, an object, a memory, or an image when performing the mental task.

3. The method of claim 2, where providing the user prompt in the message comprises providing the message to a display for viewing by the user or playing the message for listening by the user.

4. The method according to any preceding claim, where one or more brain activity sensor devices scan the user for the biometric brain activity signal by measuring electro-encephalogram (EEG) waveforms or functional near-infrared spectroscopy (FNIRS) waveform signals generated by the user when performing the mental task.

5. The method of claim 4, where the one or more brain activity sensor devices comprise an earphone that is adapted to measure EEG waveforms from an outer ear of the user.

6. The method according to any preceding claim, further comprising collecting the reference biometric template signal from the user during a user enrollment phase.

7. The method of claim 6, where the reference biometric template signal is collected during the user enrollment phase by:
presenting the user with a user enrollment prompt which prompts the user to perform a mental enrollment task by thinking about one or more of a specified password, an object, a memory, or an image;
scanning the user for the reference biometric template signal when the user performs the mental enrollment task, where the reference biometric template signal reflects the brainwave activity of the user when performing the mental enrollment task; and
storing the reference biometric template signal in a memory device.

8. An authentication system, comprising:
a first computing device configured to request data access by scanning a biometric brain activity signal that is specific to a user of the first computing device in response to a user prompt identifying a mental task to be performed by the user; and
a second computing device configured to authenticate a data access request from the first computing device by storing a copy of the biometric brain activity signal, comparing the biometric brain activity signal to a reference biometric template signal, and determining whether to authenticate the user based on whether the biometric brain activity signal matches the reference biometric template signal.

9. The authentication system of claim 8, where the first computing device comprises a display screen or audio speaker which provides the user prompt as a message which instructs the user to think about a specified password, object, memory, or one or more images when performing the mental task.

10. The authentication system of claim 8 or claim 9, where the first computing device comprises a smartphone coupled to one or more brain activity sensor devices scan the user for the biometric brain activity signal by measuring electro-encephalogram (EEG) waveforms or functional near-infrared spectroscopy (FNIRS) waveform signals generated by the user when performing the mental task.

11. The authentication system of claim 10, where the one or more brain activity sensor devices are included in the second computing device.

12. The authentication system according to any of claims 8 to 11, where the second computing device comprises one or more earphones configured to capture and record electro-encephalogram (EEG) waveforms generated by the user when performing the mental task.

13. The authentication system according to any of claims 8 to 12, further comprising one or more brain activity sensor devices adapted to measure EEG waveforms from an outer ear of the user.

14. The authentication system according to any of claims 8 to 13, where the first computing device is further configured to collect the reference biometric template signal from the user during a user enrollment phase.

15. The authentication system according to any of claims 8 to 14, where the first computing device is further configured to collect the reference biometric template signal by:
presenting the user with a user enrollment prompt which prompts the user to perform a mental enrollment task by thinking about one or more of a specified password, an object, a memory, or an image;
scanning the user for the reference biometric template signal when the user performs the mental enrollment task, where the reference biometric template signal reflects brainwave activity of the user when performing the mental enrollment task; and
storing the reference biometric template signal in a memory device.
